# EUROPEAN PATENT SPECIFICATION

(11) **EP 2 514 551 B1**
(45) Date of publication and mention of the grant of the patent: **30.11.2016**
(21) Application number: 09808938.6
(22) Date of filing: 18.12.2009
(51) Int. Cl.: B23K 20/12

(54) **MACHINE TOOL HEAD FOR FRICTION STIR WELDING WITH A FLOATING SHOULDER**
MASCHINENWERKZEUGKOPF FÜR RÜHRREIBSCHWEISSEN MIT EINER SCHWEBENDEN SCHULTER
TÊTE DE MACHINE-OUTIL POUR SOUDAGE PAR FRICTION-MALAXAGE AVEC UN ÉPAULEMENT FLOTTANT

(43) Date of publication of application: 24.10.2012
(73) Proprietor: FUNDACION FATRONIK, 20009 San Sebastian (ES); Mtorres Diseños Industriales, S.A. Unipersonal, 31119 Torres de Elorz (Navarra) (ES)
(72) Inventor: RIVERO RASTRERO,María, Asunción, E-20009 San Sebastian (ES); TORRES MARTINEZ, Manuel, E-31119 Torres de Elorz (Navarra) (ES)
(74) Representative: Carpintero Lopez, Francisco
(86) International application number: PCT/ES2009/070604
(87) International publication number: WO 2011/073465

(56) References cited:
- EP-A1- 1 872 893
- WO-A1-00/02704
- US-A- 5 697 544
- US-B1- 6 497 355

## Description

### Technical Field of the Invention

The present invention is included in the technical field of welding tools and, particularly, in the sector of friction stir welding machines.

### Background of the Invention

The friction stir welding (FSW) process was invented, patented and developed for industrial purposes by TWI (The Welding Institute), in Cambridge, United Kingdom. US patent US-5460317 describes this friction stir welding process and it constitutes the most descriptive text of this new welding technique. In the method described in this patent, a tool is used consisting of a pin which is rigidly joined to a shoulder, or planar section cylinder which, once the friction exerted by the shoulder has taken the materials to be joined together to a plastic state, is penetrated between the materials to be joined and such materials are stirred so that they are joined together. This pin preferably has a geometry that can force the material to be joined to move up and down. When the pin moves along the joint line, a complex flow of the material occurs which, on the leading side goes from the front part to the rear part, whereas on the trailing side there is a slight forward movement of the flow, a vertical movement occurring on both sides.

Friction stir welding is a solid-state joining technique that does not use filler material, which allows welding different materials together or materials which are not easily weldable by conventional techniques such as, for example, very thick aluminum, copper, magnesium, obtaining excellent mechanical properties and causing only a minor distortion in the welded pieces.

The basic concept of the working of friction stir welding is a non-consumable rotating tool with a profiled rotor or pin and with a shoulder or planar section cylinder, usually provided with marks or having a concave section, with a specific design. Said pin is inserted between the adjacent ends of the pieces to be welded and traverses the entire joint line.

The functions carried out by both the pin and the shoulder are the following: On one hand, the shoulder applies pressure on the pieces to be welded. Said pressure, together with the rotation, causes heating by friction which aids in taking the metal forming the metal pieces to a plastic state in the area surrounding the pin. Once the metals are in the plastic state, the pin, the friction of which with the material provides heat, although in a much lower proportion than that provided by the friction of the shoulder, stirs said metals and, by means of its rotating movement, entrains the material around it, thus producing the weld as the tool moves forward and the material cools. In the stirring process, the shoulder provides an additional service, which is to prevent the material from being expelled out of the contours of the tool, confining it in the piece in view of the fact that it applies a forging pressure of the material. This technique has also been used to join several plastics.

The shoulder of the tool rotates in solidarity with the pin in most of the tools used, although there are also tools in which the shoulder does not rotate (German patent application DE-A-102005030800). There are two types of tools; the first and most basic type is the rigid tool, in which the pin has no relative movement with respect to the shoulder. If welding a variable thickness in a piece with a conventional tool (i.e., a rigid tool) is desired, the tool must be changed for this purpose. The use of rigid tools for welding leads to several problems. In order for the pin to reach the controlled depth, the penetration depth of the shoulder depends on the dimensions of the tool (on the length of the pin). When the length of the pin is too short, the shoulder enters too far into the material to be welded, excessively heating the material. In contrast, when the penetration of the pin is too little, it does not heat enough, which results in obtaining a poor-quality weld. On the other hand, if the penetration of the shoulder is the necessary penetration but the pin is too short, insufficient penetration problems occur, i.e., when the penetration is too little, the minimum level of plastic deformation is not reached and the necessary stirring is not achieved. In contrast, if the penetration of the shoulder is too great, there would be problems of colliding with the work table. On the other hand, when the pieces to be joined do not have constant thickness along their entire length, areas that are welded correctly and areas that are not may appear. Another drawback of the use of a rigid tool is the hole defect appearing in the exit section of the tool. An unwanted concentration of stresses during operation may occur therein.

On the other hand in tools of the second type, the pin has relative axial movement with respect to the shoulder, this tool being called an "FSW tool with a retractable pin". Adjustable pins are useful for repairing welds when repairs need to be made at different welding heights, though without too many variations because the diameter and the length depend on the thickness of the materials to be repaired. Tools with a retractable pin are also useful for seam welding when the pin penetrates into and is extracted from the piece without leaving holes. It is therefore possible to use this method for circular welding for sealing tanks in a single step. In friction stir welding, it is very important to control the distance of the pin to the rear part of the pieces at a very closed tolerance in order to assure welding with the tip of the pin being, for example in the case butt welds, at approximately 0.1 mm. In this technique, it must also be taken into account that, in order for the material to be welded to reach the correct plastic state, the pressure exerted by the shoulder must be controlled by means of a precise control of the force applied thereto, such that it is not advisable to use this technique in the case of one-piece tools if the force parameters are not completely controlled because, for example, in the case of an excessive pressure force, the tool may penetrate too far into the material to be welded such that the pin can even hit the surface of the work table.

Patent US-5697544 describes a friction stir welding head with an adjustable pin and with a variable diameter of the shoulder. Although this tool offers the possibility of changing the diameter of the shoulder during the welding process, it has a series of drawbacks. It thus requires three motors for two shoulder diameters and, when three diameters are needed, four motors. Three motors are needed, namely, one for the longitudinal movement of the pin, another one for the longitudinal movement of the outer shoulder and another one for the rotation of the entire system, the inner shoulder being moved with the entire system.

Patent US-5713507 describes a head with a retractable pin which is controlled by means of hydraulic cylinders for friction stir welding. This head also has a series of drawbacks, mainly relating to the hydraulic system used and the corresponding structural conditioning factors. On one hand, there can be hydraulic fluid leaks due to tightness problems, and on the other hand, the laborious maintenance of the seals, which, in addition to the high temperatures generated during the welding process, may be deteriorated, is required. Given that the hot material of the pin is in contact with the oil of the hydraulic cylinder, the lower cavity can fill up with hydraulic fluid, which would make it impossible for the pin to drop to its lower position, and the oil inlet/outlet could even gum up, which may prevent the tool from being able to rotate due to gumming-up of the shoulder. This head in turn only has a diameter of the shoulder and changing it is not easy, in addition to the fact that it is difficult to change in the event that the pin breaks.

Patent application JP-2002178168 describes a head with a retractable pin for friction stir welding, in which the pin is moved by an electric motor with transmission by means of coupling by gears and wheels, such that for the movement of the pin a large part of the head also moves, which takes away effectiveness from the process that is carried out with this head. On the other hand, the transmission of rotation is within the axially mobile part, so in the event of wear of the tools, it is necessary to disassemble a large part of the head, which complicates the practical utility of this head.

Patent US-5893507 describes an auto-adjusting pin tool for friction stir welding which automatically adjusts to the work pieces. The device comprises a head housing a motor connected to a control system, and a shaft supported by bearings. The shaft forms an interior cylinder and is encircled by a stationary slip ring traversed by hydraulic passageways into the interior cylinder of the shaft such that a piston housed therein may be moved axially. This piston is coupled to a pin tool which is seated in and penetrates through a shoulder. In the welding process and given that the head traverses the shoulder, the control system detects any pressure increase on the lower face of the shoulder and moves the shaft to keep the pressure constant. At the same time, the piston moves towards the work piece and thus extends the pin further from the shoulder. This keeps the pin at a proper penetration depth. Nevertheless, the pin is moved by means of a hydraulic cylinder, which means that hydraulic fluid, such as oil for example, gives a slow kinematic response. Likewise, the valve system for inserting the pin is susceptible to having leaks and the pressure insertion system is susceptible to having sealing problems due to dirt. On the other hand, the piston for the axial movement is located far from the pin, so there may be problems with the coupling and buckling problems. Another drawback of this head resides in the fact that for the piston to be able to exert sufficient force, it must have a large enough size, which considerably increases the size of the head. The biggest problem in this system is that two movements must be made to achieve the objective since a relative movement of the pin with respect to the shoulder must be made while it is in its lower position. If this movement is made incorrectly, there may be collisions, with the added problem of the pin breaking. Two operations, namely, that of the pin and that of the pin, must be activated at the same time and at the same speed, the two being hydraulically operated. It also has a hydraulic motor to rotate the motor, whereby achieving a suitable rotating speed at high rpm-s (normally over 1500 rpm-s since lower rpm-s do not show correct performance).

Patent US-5718366 describes a friction stir welding tool for work pieces of variable thickness comprising a spring joined to the shoulder. This spring is pre-compressed so that at a pre-determined height it applies a force, which has the advantage of being a very simple way of controlling the force exerted on the shoulder. Nevertheless, this tool is a disadvantage in terms of the fact that the axial movement of the pin and the shoulder are not completely independent of one another, that if because of a geometric error the pieces to be joined did not have constant thickness, the shoulder would not exert the pre-determined force based on the in base a the precompression of the spring because if a constant force is desired, it is necessary to control deformation of the spring and act accordingly, which would modify the penetration depth of the pin, which may result in lack of penetration problems, so it would be impossible to achieve constant force during the welding process or the position options for the pin and force of the shoulder at the same time.

### Description of the Invention

The object of the present invention is to overcome the drawbacks of the state of the art described above by means of a machine tool head for friction stir welding, comprising a rotating shoulder connected at one end of a cylindrical support for heating along a path by rotating friction under pressure welding areas of at least one material which by friction can be taken to a plastic state, preferably a metal although it can also be a plastic material, until the material in each welding area is in a plastic state; a rotating pin emerging through the rotating shoulder, for penetrating in each welding area until a predetermined penetration depth and stirring the material that is in said plastic state; adjustment means for adjusting the relative position between the shoulder and the rotating pin, operable in response to pressure values measured by a pressure sensor; and a drive motor connected to the pin for conferring a rotation movement to the pin, the head of which is characterized in that
the pin is connected to the motor through a drive shaft arranged in an inner axial channel of the cylindrical support such that the cylindrical support can move axially with respect to the drive shaft,
the cylindrical support and the drive shaft are coupled in an axially sliding key joint such that the rotation of the drive shaft confers said rotation movement simultaneously to the pin and to the cylindrical support of the shoulder, and
the cylindrical support and the shoulder are arranged in a rotating manner in a mobile support structure which is axially slidable due to the action of said adjustment means with respect to the pin and to the drive shaft.

In one embodiment of the axially sliding key joint, the drive shaft has a polygonal cross section and the inner channel of the cylindrical support has a complementary polygonal cross section. In this case, the drive shaft can be a polygonal shaft, such as, for example, of a square, pentagonal, hexagonal, etc. cross section, or a profiled shaft of circular arches, whereas the inner channel of the cylindrical support has the corresponding complementary cross section.

In another embodiment of this sliding key joint, the drive shaft comprises, in its periphery, a plurality of axial ribs, and in that the inner channel comprises in its walls a plurality of recesses, complementary to said axial ribs, said ribs and recesses being coaxial with said drive shaft. In this embodiment, the drive shaft can be a ribbed, profiled, grooved or channeled, or a toothed shaft, whereas the inner channel of the support has the corresponding complementary cross section.

In a preferred embodiment of the invention, the support structure comprises a cylindrical part emerging, coaxially to said drive shaft, from a base plate and the cylindrical support is housed rotatably and immobilized axially in said cylindrical part, whereas the shoulder traverses and rotates in an opening with a circular cross section in the base plate. In this embodiment, inside this cylindrical part of the support structure there is arranged a plurality of bearings encircling the cylindrical support so that it can rotate inside said cylindrical part driven by the drive shaft.

The adjustment means can be comprised, for example, by at least one hydraulic cylinder that can move said mobile support structure and, therefore, the cylindrical support and the base plate in the direction coaxial with said drive shaft. Therefore, in one embodiment, the adjustment means can be comprised by at least three hydraulic cylinders that can move said support structure in the direction coaxial with said drive shaft, each of the hydraulic cylinders being anchored by one of its ends in a first anchoring point of the base plate distributed in the base plate equidistant from one another and with respect to the cylindrical support, whereas at the other end they are anchored in a second anchoring point in a fixed structure. In a preferred embodiment, the adjustment means comprise four hydraulic cylinders anchored by one of their ends in respective first anchoring points of the base plate which are distributed such that respective two of said four first anchoring points are located in diagonal lines crossing one another in the drive shaft.

It can be observed that the head according to the present invention satisfactorily solves the problems inherent to friction stir welding heads of the state of the art given that since the pin is connected to the motor through the drive shaft and arranged in the inner axial channel of the cylindrical support such that the cylindrical support can move axially with respect to the drive shaft, and since the cylindrical support and therefore the shoulder are arranged in a rotating manner in the mobile support structure axially slidable due to the action of the adjustment means, it is achieved that
- the drive motor acts directly on the drive shaft and, therefore, on the pin;
- the axial movement of the pin and shoulder are decoupled from one another, whereas the rotating movement continues to be the same in both parts of the tool designed for friction stir welding;
- there are no axial adjustment mechanisms arranged inside the cylindrical support which simplifies its structure and simplifies the replacement of the elements with the most wear, namely the pin and the shoulder, which can further have a small size, whereby the expense for their replacement is substantially reduced;
- to adjust the penetration of the pin to variable thicknesses, whether they are known variable thicknesses or variable thicknesses resulting from unexpected irregularities of the material/materials to be welded, such as metals, it is not necessary for the drive shaft, therefore the pin, to change their axial position with respect to the motor, which simplifies the stable connection of the drive shaft to the motor and of the pin to the drive shaft;
- it is achieved that the degree of projection of the pin from the shoulder can be modified according to different parameters, such as the distance required at all times during welding from the pin to the table or the control of the exit of the pin at the end of the piece;
- the measurement of the pressure force of the shoulder on the piece to be welded and the subsequent actuation occur at the same point, i.e., the forces are measured in the shoulder, and it is at this point where it is actuated, increasing or decreasing the force thereof, which allows a precise and fast reaction to the variable thicknesses of the material to be welded, to the softening or hardening occurring in the material due to the heat introduced by the action of the shoulder and of the pin, and/or when there are gaps between sheets that are not altogether parallel such that there is less material and the pressure drops and there is a need for greater penetration;
- when the axial adjustment means are hydraulic cylinders, there are no elements that are degradable due to temperature (o-rings, seals, etc.) in the area of high temperature close to the shoulder and to the pin, or hydraulic liquid channels or ducts inside the cylindrical support, which reduces the possibility of breakdowns caused by blockages of the hydraulic system, the wear of such degradable elements and the leaking of hydraulic fluid that could come into contact with the material to be welded.

Additionally, the head is easily couplable to conventional welding machines tool such that it can weld in 4 and a half axes, 3 axes of translation in the machine, a complete rotation in the C axis (axis that makes it rotate vertically, Z axis) and one rotation of, for example, +/- 20º in the direction of the weld, which allows performing three-dimensional welds with a retractable pin.

### Brief Description of the Drawings

Several aspects and embodiments of the invention are described below based on several drawings, in which
Figure 1 is a schematic partial bottom front perspective view of an embodiment of the head according to the present invention;
Figure 2 is a schematic vertical sectional view of the head along line A-A' shown in Figure 1;
Figures 3A, 3B and 3C are schematic sectional views along section line B-B' of embodiments of the drive shaft and of the cylindrical support;
Figure 4 is a schematic front elevational view of the head of Figure 1 assembled on a swiveling support of a machine tool;
Figure 5 is a schematic view of the assembly support-head shown in Figure 4;
Figure 6, is a front perspective view of the assembly shown in Figure 5 integrated in a horizontal rotation support of the machine tool.

These figures show reference numbers identifying the following elements:
1 head
2 rotating shoulder
3 rotating pin
4 cylindrical support
4a inner channel
4b recesses
5 hydraulic cylinder
6 cover
7 drive motor
7a shaft of the motor
8 drive shaft
8a perimetric ribs
9 connector sleeve
10 mobile support
10a cylindrical part
10b base plate
10c opening
10d guiding stud
10e outer casing
11 bearing
12 fixed structure
13 protective plate
14 vertical swiveling support
15 horizontal rotation support

### Modes of carrying out the Invention

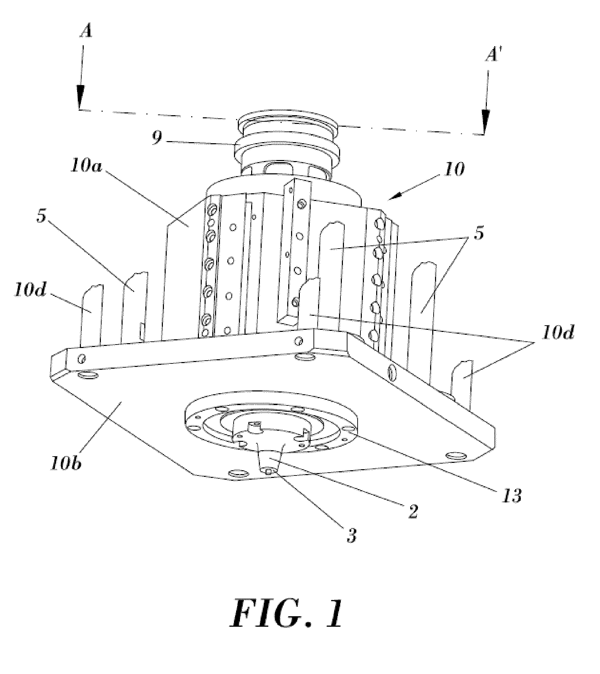

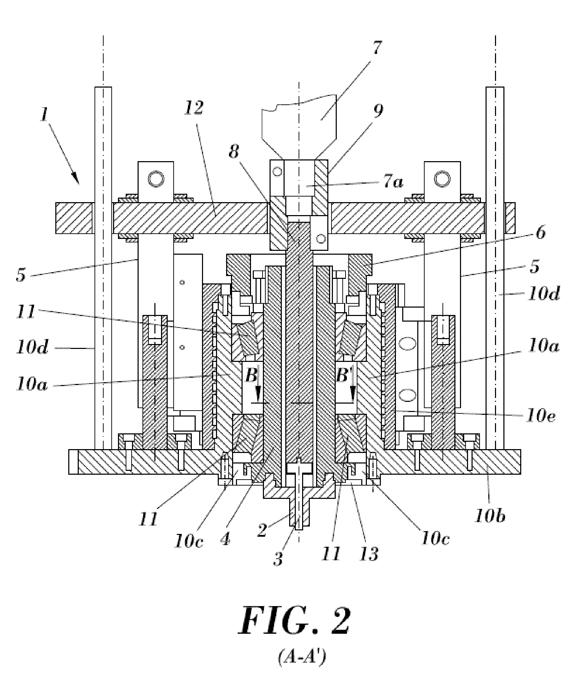

In the embodiment shown in Figures 1 and 2, the head -1- comprises a rotating pin -3- connected to the driving shaft-7a- of a drive motor -7- by means of a drive shaft -8- which is arranged in an axially slidable manner in an inner axial channel -4a- of the cylindrical support -4-. A floating rotating shoulder -2-connected to the lower end of a cylindrical support -4- emerges around the pin.

The cylindrical support -4- and the shoulder -2- are arranged in a rotating manner in a mobile support structure -10- that is axially slidable with respect to the pin -3- and to the drive shaft -8- due to the action of four hydraulic adjustment cylinders -5-. Figure 1 shows only (the inner parts of) three of these cylinders, the fourth hydraulic cylinder being behind the cylindrical part -10a-.

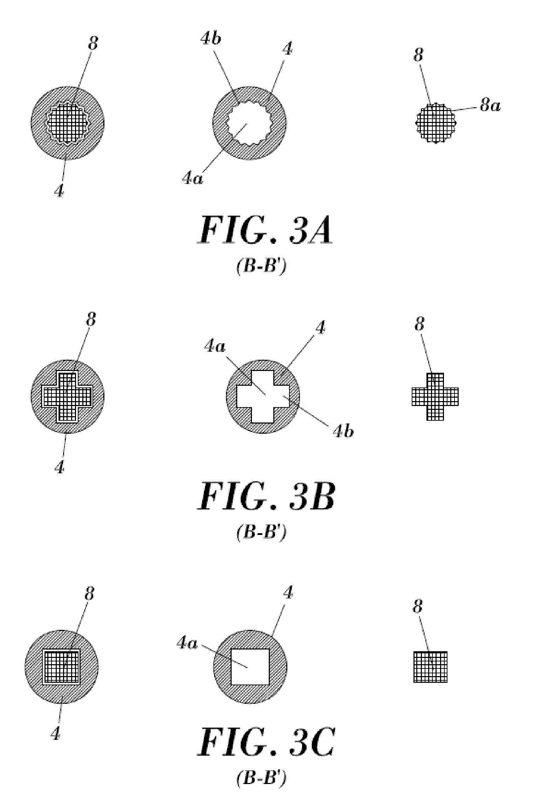

The inner channel -4a- of the cylindrical support -4- and the drive shaft -8- are coupled in sliding key joint such that the rotation of the drive shaft -8-confers said rotating movement simultaneously to the pin -3- and to the cylindrical support -4- of the shoulder -2-. Figures 3A, 3B and 3C which will be described below show possible embodiments of this key joint.

The support structure -10- comprises a cylindrical part -10a- emerging, coaxially to said drive shaft -8-, from the upper face of a base plate -10b-. The cylindrical support -4- is housed rotatably and immobilized axially in that cylindrical part -10a- by means of bearings -11-, whereas the shoulder -2-traverses an opening -10c- with a circular cross section in the base plate -10b-. In the lower part of the cylindrical support -4- and surrounding the shoulder -2-there is coupled a protective plate -13- blocking the opening -10c-. The upper part of the cylindrical part -10a- is blocked by a closure -6- which prevents foreign bodies that may damage the bearings -11- from entering. The cylindrical part -10a- and the base plate -10b- are a single piece.

Each of the four hydraulic adjustment cylinders -5- is anchored at one of its ends in a first anchoring point of the base plate -10b- and at its other end to a second anchoring point in a fixed structure -12-. Respectively, two of the four first anchoring points are located in diagonal lines crossing one another in the drive shaft -8-.

In the vicinity of the hydraulic cylinders -5-, there are respective guiding studs -10d- which are threaded in the base plate -10b- and the upper parts of which slidingly traverse the fixed structure -12-. Figure 1 only shows (the lower parts of) three of these studs -10d-, the fourth stud being located behind the cylindrical part -10a-.

In the welding process, the mobile structure -10- presses the rotating shoulder -2- against the piece to be welded (not depicted in the figures). Due to the pressure and the rotation of the shoulder -2-, the metal in the area of the piece to be welded on which the shoulder -2- rotates heats up until the metal acquires a plastic state which allows the rotating pin -3- to penetrate therein and, due to its rotation, stir the plastic metal in a conventional manner, achieving the weld along the path of the predetermined joint line. The forward movement along the joint line can be carried out, according to the machine tool which is used and/or according to the type of weld that will be used, by moving the piece to be welded with respect to the head -1- or vice versa.

In the forward movement along the joint line, the existence of variable thicknesses is detected, such variable thicknesses being either predetermined or being defects of the material to be welded, by means of a pressure sensor (not shown in the figures) in the form of a pressure gauge placed at the fluid entrance -exit of the hydraulic cylinders -5-, which transmits the detected pressure values to a programmable control unit (not shown in the figures) which, according to each value, calculates the force exerted by means of conversion by areas, and operates the hydraulic cylinders -5- so that they increase or reduce their pressure on the base plate -10b-, and therefore on the shoulder -2-. Upon increasing the pressure, the cylindrical support -4- slides axially on the drive shaft -8- towards the piece to be welded, whereas upon reducing the pressure, the cylindrical support -4- slides axially on the drive shaft -8- in the direction away from the piece to be welded. Given that the drive shaft -8-, and therefore the pin -3-, as it is coupled to the fixed structure -12-, will not move with the support structure -10- but rather they will stay in a stationary position, when the shoulder -2- moves towards the piece to be welded due to the detection of a reduction of the thickness of the piece in the area to be welded, the pin -3- protrudes less from the shoulder -2-, whereas when the shoulder -2- moves towards the piece to be welded due to the detection of an increase of the thickness of the piece in the area to be welded, the pin -3-protrudes further, the pin -3- in any case maintaining its controlled position. An automatic adjustment of the suitable penetration depth of the pin -3- in the piece to be welded is thus achieved.

Figures 3A, 3B and 3C show embodiments of the key joint between the drive shaft -8- and the cylindrical support -4- which simultaneously allow the axial sliding of the support -4- on the shaft -8- and the transmission of the rotation movement of the shaft -8- to the support -4-. Therefore, in Figure 3A the drive shaft is a channeled or keyed shaft which is provided on its periphery with a plurality of perimetric ribs -8a-, whereas the walls of the inner channel -4a- are provided with a plurality of recesses -4b-, complementary to said perimetric ribs -8a-. The ribs -8a- and recesses -4b- are coaxial with the drive shaft -8-. In Figure 3B, the drive shaft -8- has a cross-shaped cross section, i.e., it has four ribs -8a- whereas the cylindrical support -4- has in the walls of its inner cavity -4a- four recesses -4b complementary to those ribs -8a-. On the other hand, the drive shaft -8- and the inner channel -4a- of the cylindrical support -4- have respective square cross sections, complementary to one another.

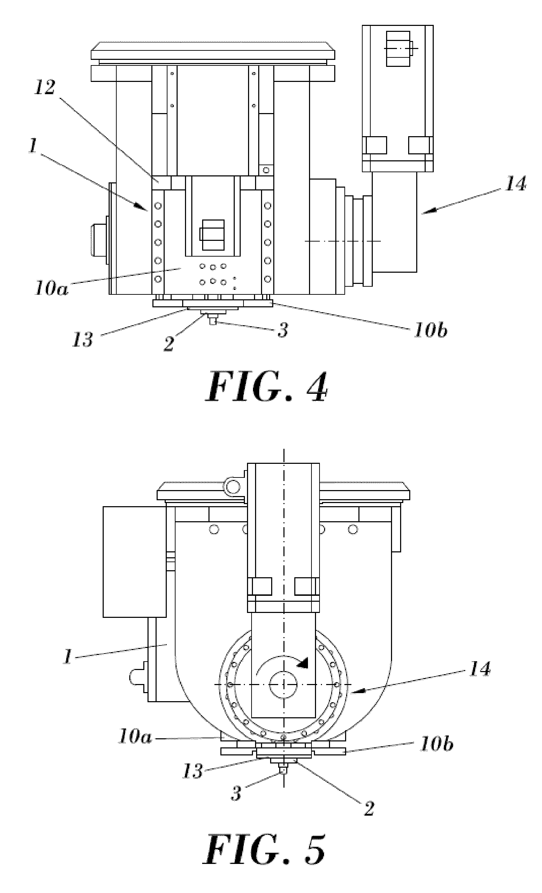

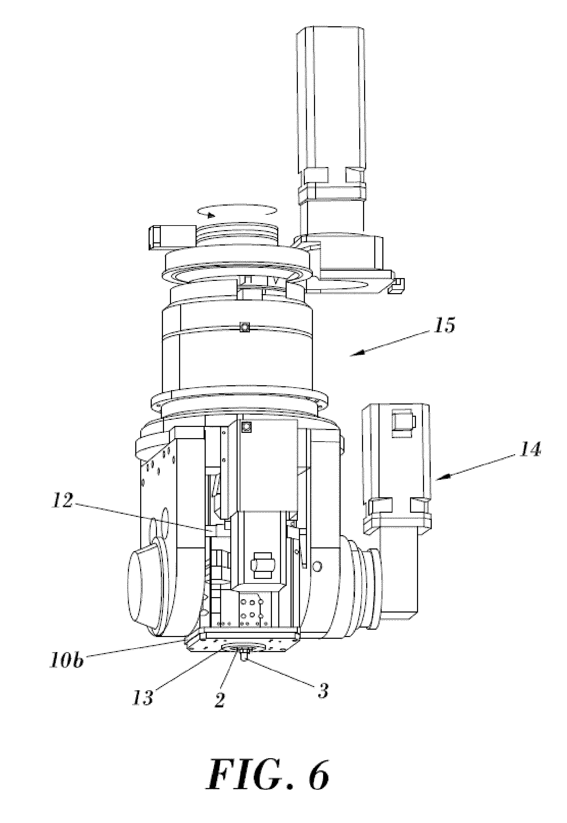

Figures 4 and 5 schematically show how the head -1- shown in Figures 1 and 2 can be coupled to a conventional swiveling support -14- of an also conventional machine tool (not shown in the figures), whereas Figure 6 schematically shows how the head-swiveling support assembly shown in Figures 4 and 5 can be coupled to an also conventional horizontal rotation support -15- of such machine tool.

## Claims

1. Machine tool head for friction stir welding, comprising
a floating rotating shoulder (2) connected at one end of a cylindrical support (4) for heating along a path by rotating friction under pressure welding areas of at least one material until the material in each welding area is in a plastic state;
a rotating pin (3) emerging at the bottom part of the shoulder (2), for penetrating in each welding area until a predetermined penetration depth and stirring the material that is in said plastic state;
adjustment means (5) for adjusting the relative position between the shoulder (2) and the pin (3), operable in response to pressure values measured by a pressure sensor; and
a drive motor (7) connected to the pin (3) for conferring a rotation movement to the pin (3);
**characterized in that**
the pin (3) is connected to the motor (7) through a drive shaft (8) arranged in an inner channel (4a) of the cylindrical support (4) such that the cylindrical support (4) can move axially with respect to the drive shaft (8),
the cylindrical support (4) and the drive shaft (8) are coupled in a sliding key joint such that the rotation of the drive shaft (8) confers said rotation movement simultaneously to the pin (3) and to the cylindrical support (4) of the shoulder (2),
the cylindrical support (4) and the shoulder (2) are arranged in a rotating manner in a mobile support structure (10) which is axially slidable due to the action of said adjustment means (5) with respect to the pin (3) and to the drive shaft (8).

2. Head according to claim 1, **characterized in that** the drive shaft (8) has a polygonal cross section and the inner channel (4a) of the cylindrical support (4) has a complementary polygonal cross section.

3. Head according to claim 1, **characterized in that** the drive shaft comprises, in its periphery, a plurality of perimetric ribs (8a), and **in that** the inner channel (4a) comprises in its walls a plurality of recesses (4b), complementary to said perimetric ribs (8a), said ribs (8a) and recesses (4b) extending coaxially with said drive shaft (8).

4. Head according to claim 1, 2 or 3, **characterized in that**
the support structure (10) comprises a cylindrical part (10a) emerging, coaxially to said drive shaft (8), from a base plate (10b);
the cylindrical support (4) is housed rotatably and immobilized axially in said cylindrical part (10a);
the shoulder (2) traverses and rotates in an opening (10c) with a circular cross section in the base plate (10b).

5. Head according to claim 4, **characterized in that** in said cylindrical part (10a) there is arranged a plurality of bearings (11) encircling the cylindrical support (4).

6. Head according to any one of claims 1 to 5, **characterized in that** the adjustment means (5) comprise at least one hydraulic cylinder (5) that can move said support structure (10) in direction coaxial with said drive shaft (8).

7. Head according to claim 4 or 5, **characterized in that**
the adjustment means (5) comprise at least three hydraulic cylinders (5) that can move said support structure (10) in a direction coaxial with said drive shaft (8);
each of the hydraulic cylinders (5) is anchored at one of its ends in a first anchoring point of the base plate (10B) and at the other end to a second anchoring point in a fixed structure (12);
the first anchoring points are distributed in the base plate (10b) equidistant from one another and concentrically with respect to said drive shaft (8).

8. Head according to claim 4 or 5, **characterized in that**
the adjustment means (5) comprise four hydraulic cylinders (5) that can move said support structure (10) in the direction coaxial with said drive shaft (8);
each of the hydraulic cylinders is anchored at one of its ends in a first anchoring point of the base plate (10b) and at the other end to a second anchoring point in a fixed structure (12);
respective two of said first four anchoring points are located in diagonal lines crossing one another in the drive shaft (8).

## Patentansprüche

1. Maschinenwerkzeugkopf zum Rührreibschweißen, mit:
einem schwimmenden Drehansatz (2), der an einem Ende einer zylindrischen Stütze (4) angeschlossen ist, um sich entlang eines Pfads unter Druckschweißbereichen durch Rotationsreibung von zumindest einem Material zu erwärmen, bis das Material in dem jeweiligen Schweißbereich in einem plastifizierten Zustand ist;
einem Drehstift (3), der in einem unteren Teil des Ansatzes (2) eintaucht, um die jeweiligen Schweißbereiche bis zu einer vorbestimmten Durchdringungstiefe zu durchdringen und das Material zu rühren, das in dem plastifizierten Zustand ist;
einer Einstelleinrichtung (5) zum Einstellen der relativen Position zwischen dem Ansatz (2) und dem Stift (3), die als Reaktion auf Druckwerte betreibbar ist, die durch einen Drucksensor gemessen werden; und
einem Antriebsmotor (7), der mit dem Stift (3) verbunden ist, um eine Drehbewegung zu dem Stift (3) zu übertragen;
**dadurch gekennzeichnet, dass**
der Stift (3) mit dem Motor (7) durch eine in einem inneren Kanal (4a) der zylindrischen Stütze (4) angeordneten Antriebswelle (8) so verbunden ist, dass sich die zylindrische Stütze (4) hinsichtlich der Antriebswelle (8) axial bewegen kann,
die zylindrische Stütze (4) und die Antriebswelle (8) mittels einer Gleitnutverbindung so aneinander gekoppelt sind, dass die Drehung der Antriebswelle (8) die Drehbewegung gleichzeitig zu dem Stift (3) und der zylindrischen Stütze (4) des Ansatzes (2) überträgt,
die zylindrische Stütze (4) und der Ansatz (2) in einer beweglichen Stützstruktur (10) drehbar angeordnet ist, die aufgrund der Wirkung der Einstelleinrichtung (5) relativ zu dem Stift (3) und der Antriebswelle (8) axial gleitbar ist.

2. Kopf gemäß Anspruch 1, **dadurch gekennzeichnet, dass** die Antriebswelle (8) einen polygonalen Querschnitt hat und der innere Kanal (4a) der zylindrischen Stütze (4) einen komplementären, polygonalen Querschnitt hat.

3. Kopf gemäß Anspruch 1, **dadurch gekennzeichnet, dass** die Antriebswelle in ihrem Umfang viele perimetrische Rippen (8a) aufweist, und dass der innere Kanal (4a) in seinen Wänden viele Ausnehmungen (4b) komplementär zu den perimetrischen Rippen (8a) aufweist, wobei sich die Rippen (8a) und die Ausnehmungen (4b) koaxial zu der Antriebswelle (8) erstrecken.

4. Kopf gemäß Anspruch 1, 2 oder 3, **dadurch gekennzeichnet, dass**
die Stützstruktur (10) einen zylindrischen Teil (10a) aufweist, der koaxial zu der Antriebswelle (8) von einer Basisplatte (10b) hervortritt;
die zylindrische Stütze (4) drehbar und axial unbeweglich in dem zylindrischen Teil (10a) untergebracht ist;
der Ansatz (2) eine Öffnung (10c) mit einem runden Querschnitt in der Basisplatte (10b) durchquert und sich darin dreht.

5. Kopf gemäß Anspruch 4, **dadurch gekennzeichnet, dass** in dem zylindrischen Teil (10a) viele Lager (11) angeordnet sind, die die zylindrische Stütze (4) umgeben.

6. Kopf gemäß einem der Ansprüche 1 bis 5, **dadurch gekennzeichnet, dass** die Einstelleinrichtung (5) zumindest einen Hydraulikzylinder (5) aufweist, der die Stützstruktur (10) in einer Richtung koaxial zu der Antriebswelle (8) bewegen kann.

7. Kopf gemäß Anspruch 4 oder 5, **dadurch gekennzeichnet, dass**
die Einstelleinrichtung (5) zumindest drei Hydraulikzylinder (5) aufweist, die die Stützstruktur (10) in einer Richtung koaxial zu der Antriebswelle (8) bewegen können;
wobei die Hydraulikzylinder (5) jeweils an einem ihrer Enden an einem ersten Verankerungspunkt der Basisplatte (10B) und an dem anderen Ende an einem zweiten Verankerungspunkt in einer festen Struktur (12) verankert sind;
die ersten Verankerungspunkte in der Basisplatte (10b) mit gleichen Abständen voneinander und konzentrisch hinsichtlich der Antriebswelle (8) verteilt sind.

8. Kopf gemäß Anspruch 4 oder 5, **dadurch gekennzeichnet, dass**
die Einstelleinrichtung (5) vier Hydraulikzylinder (5) aufweist, die die Stützstruktur (10) in der Richtung koaxial zu der Antriebswelle (8) bewegen können;
die Hydraulikzylinder jeweils an einem ihrer Enden an einem ersten Verankerungspunkt der Basisplatte (10b) und an dem anderen Ende an einem zweiten Verankerungspunkt in einer festen Struktur (12) verankert sind;
jeweils zwei der ersten vier Verankerungspunkte in Diagonalen angeordnet sind, die sich in der Antriebswelle (8) einander kreuzen.

## Revendications

1. Tête de machine-outil pour soudage par friction-malaxage, comprenant
un épaulement rotatif flottant (2) raccordé à une extrémité d'un support cylindrique (4) pour chauffage le long d'une voie par friction rotative sous pression de zones de soudage d'au moins une matière jusqu'à ce que la matière de chaque zone de soudage soit dans un état plastique ;
une broche rotative (3) émergeant au niveau de la partie inférieure de l'épaulement (2), pour pénétrer dans chaque zone de soudage jusqu'à une profondeur prédéfinie de pénétration et agiter la matière qui se trouve dans ledit état plastique ;
des moyens d'ajustement (5) pour ajuster la position relative entre l'épaulement (2) et la broche (3), actionnable en réponse à des valeurs de pression mesurées par un capteur de pression ; et
un moteur d'entraînement (7) raccordé à la broche (3) pour conférer un mouvement de rotation à la broche (3) ;
**caractérisée en ce que**
la broche (3) est raccordée au moteur (7) par le biais d'un arbre d'entraînement (8) disposé dans un canal intérieur (4a) du support cylindrique (4) de sorte que le support cylindrique (4) puisse se déplacer axialement par rapport à l'arbre d'entraînement (8),
le support cylindrique (4) et l'arbre d'entraînement (8) sont couplés dans un joint à clavette coulissante de sorte que la rotation de l'arbre d'entraînement (8) confère ledit mouvement de rotation simultanément à la broche (3) et au support cylindrique (4) de l'épaulement (2),
le support cylindrique (4) et l'épaulement (2) sont disposés d'une manière rotative dans une structure de support mobile (10) qui peut coulisser axialement du fait de l'action desdits moyens d'ajustement (5) par rapport à la broche (3) et à l'arbre d'entraînement (8).

2. Tête selon la revendication 1, **caractérisée en ce que** l'arbre d'entraînement (8) a une coupe transversale polygonale et le canal intérieur (4a) du support cylindrique (4) a une coupe transversale polygonale complémentaire.

3. Tête selon la revendication 1, **caractérisée en ce que** l'arbre d'entraînement comprend, à sa périphérie, une pluralité de nervures périmétriques (8a), et **en ce que** le canal intérieur (4a) comprend dans ses parois une pluralité d'évidements (4b), complémentaires desdites nervures périmétriques (8a), lesdites nervures (8a) et lesdits évidements (4b) s'étendant coaxialement par rapport audit arbre d'entraînement (8).

4. Tête selon la revendication 1, 2 ou 3, **caractérisée en ce que**
la structure de support (10) comprend une partie cylindrique (10a) émergeante, coaxialement pour entraîner ledit arbre d'entraînement (8) à partir d'une plaque de base (10b) ;
le support cylindrique (4) est logé avec liberté de rotation et immobilisé axialement dans ladite partie cylindrique (10a) ;
l'épaulement (2) traverse et tourne dans une ouverture (10c) avec une coupe transversale circulaire dans la plaque de base (10b).

5. Tête selon la revendication 4, **caractérisée en ce que** dans ladite partie cylindrique (10a), il existe une pluralité de paliers (11) entourant le support cylindrique (4).

6. Tête selon l'une quelconque des revendications 1 à 5, **caractérisée en ce que** les moyens d'ajustement (5) comprennent au moins un cylindre hydraulique (5) qui peut déplacer ladite structure de support (10) dans une direction coaxiale par rapport audit arbre d'entraînement (8).

7. Tête selon la revendication 4 ou 5, **caractérisée en ce que**
les moyens d'ajustement (5) comprennent au moins trois cylindres hydrauliques (5) qui peuvent déplacer ladite structure de support (10) dans une direction coaxiale par rapport audit arbre d'entraînement (8) ;
chacun des cylindres hydrauliques (5) est ancré à une de ses extrémités dans un premier point d'ancrage de la plaque de base (10B) et à l'autre extrémité à un deuxième point d'ancrage dans une structure fixe (12) ;
les premiers points d'ancrage sont distribués dans la plaque de base (10b) équidistante l'une de l'autre et concentriquement par rapport audit arbre d'entraînement (8).

8. Tête selon la revendication 4 ou 5, **caractérisée en ce que**
les moyens d'ajustement (5) comprennent quatre cylindres hydrauliques (5) qui peuvent déplacer ladite structure de support (10) dans la direction coaxiale par rapport audit arbre d'entraînement (8) ;
chacun des cylindres hydrauliques est ancré à une de ses extrémités dans un premier point d'ancrage de la plaque de base (10b) et à l'autre extrémité à un deuxième point d'ancrage dans une structure fixe (12) ;
respectivement deux desdits quatre points d'ancrage se trouvent dans des lignes diagonales se coupant dans l'arbre d'entraînement (8).
